(19) Europäisches Patentamt
European Patent Office
Office européen des brevets

(11) **EP 4 375 095 A2**

(12) **EUROPÄISCHE PATENTANMELDUNG**

(43) Veröffentlichungstag:
 **29.05.2024  Patentblatt 2024/22**

(21) Anmeldenummer: **24168203.8**

(22) Anmeldetag: **13.12.2017**

(51) Internationale Patentklassifikation (IPC):
 **B60G 17/0165** *(2006.01)*

(52) Gemeinsame Patentklassifikation (CPC):
 **B60G 17/0165; E01C 19/48;** B60G 2300/09;
 B60G 2500/30

(84) Benannte Vertragsstaaten:
 **AL AT BE BG CH CY CZ DE DK EE ES FI FR GB
 GR HR HU IE IS IT LI LT LU LV MC MK MT NL NO
 PL PT RO RS SE SI SK SM TR**

(62) Dokumentnummer(n) der früheren Anmeldung(en)
 nach Art. 76 EPÜ:
 **17206936.1 / 3 498 914**

(71) Anmelder: **Joseph Vögele AG
 67067 Ludwigshafen (DE)**

(72) Erfinder:
 • **RAMB, Horst
  67551 Worms (DE)**

• **BUSCHMANN, Martin
 67435 Neustadt (DE)**

(74) Vertreter: **Grünecker Patent- und Rechtsanwälte
 PartG mbB
 Leopoldstraße 4
 80802 München (DE)**

Bemerkungen:
 Diese Anmeldung ist am 03.04.2024 als
 Teilanmeldung zu der unter INID-Code 62 erwähnten
 Anmeldung eingereicht worden.

(54) **ANPASSUNG DER NIVELLIERZYLINDEREINSTELLUNG BEI EINEM STRASSENFERTIGER**

(57)  Straßenfertiger (1) mit einem Fahrwerk (19), einem relativ zum Fahrwerk (19) höhenverstellbaren Chassis (3), einem elektronischen Steuerungssystem (36) und einer an Zugholmen (9) angebrachten Einbaubohle (7), wobei die Zugholme (9) jeweils an einem Zugpunkt (15) an dem Chassis (3) angelenkt sind und die Zugpunkte (15) mittels je eines Nivellierzylinders (11) relativ zum Chassis (3) verstellbar sind. Eine Höhenverstellung des Chassis (3) kann eine Abweichung der Ist-Zugpunkthöhe (N) von einer Soll-Zugpunkthöhe hervorrufen. Um diese Abweichung zu korrigieren, umfasst das Steuerungssystem (36) eine Empfangseinheit (37), welche dazu konfiguriert ist eine aktuelle Ist-Zugpunkthöhe (N) zu erfassen, eine Auswerteeinheit (39), welche dazu konfiguriert ist, eine durch eine Höhenverstellung des Chassis (3) relativ zum Fahrwerk (19) hervorgerufene Abweichung der Ist-Zugpunkthöhe (N) von einer Soll-Zugpunkthöhe zu berechnen und eine Befehlseinheit (41), welche dazu konfiguriert ist, die Abweichung automatisch zumindest teilweise zu korrigieren, indem ein von der Befehlseinheit (41) gesendetes Korrektursignal (47) eine Hydrauliksteuerung (49) zu einem Verstellen mindestens eines der Nivellierzylinder (11) veranlasst.

FIG. 1

EP 4 375 095 A2

**Beschreibung**

Die vorliegende Erfindung betrifft einen Straßenfertiger mit einem höhenverstellbaren Chassis, einer Einbaubohle und einem Nivellierzylinder zum Verstellen der Einbaubohle, sowie ein Verfahren zum Steuern des Nivellierzylinders.

Moderne Straßenfertiger sollen für eine Vielzahl von Einsatzmöglichkeiten geeignet sein und gleichzeitig stets steigende Anforderungen an Fertigungsqualität und Effizienz erfüllen. Um unterschiedliche Schichtdicken präzise fertigen zu können, sind Straßenfertiger zum Beispiel mit einem höhenverstellbaren Chassis ausgestattet, wie dies aus EP0849398B1 bekannt ist. Dies erlaubt den ungehinderten Transport der je nach gewünschter Schichtdicke benötigten Materialmenge mittels der Verteilerschnecke vor die Einbaubohle, welche das Material sodann verdichtet und glättet. Die Einbaubohle ist dabei mit Zugholmen verbunden, welche wiederum an Zugpunkten an dem Chassis angelenkt sind. Mittels Nivellierzylindern kann die Zugpunkthöhe und damit der Anstellwinkel der Einbaubohle verstellt werden. Der Anstellwinkel definiert im Einbaubetrieb, wenn die Einbaubohle schwimmend über das Material gezogen wird, die Schichtdicke, so dass mit größerem Anstellwinkel eine größere Schichtdicke erzielt wird.

Aufgabe der Erfindung ist es, ein verbessertes Steuerungssystem für einen Straßenfertiger bereitzustellen.

Gelöst wird die Aufgabe durch einen Straßenfertiger mit den Merkmalen des Anspruchs 1 sowie einem Verfahren mit den Merkmalen des Anspruchs 8. Vorteilhafte Weiterbildungen der Erfindung sind in den Unteransprüchen angegeben.

Ein erfindungsgemäßer Straßenfertiger umfasst ein Fahrwerk, welches ein Raupen- oder Räderfahrwerk sein kann, ein relativ zum Fahrwerk höhenverstellbares Chassis, ein elektronisches Steuerungssystem und eine an Zugholmen angebrachte Einbaubohle, wobei die Zugholme jeweils an einem Zugpunkt an dem Chassis angelenkt sind und die Zugpunkte mittels je eines Nivellierzylinders relativ zum Chassis verstellbar sind.

Das Steuerungssystem umfasst eine Empfangseinheit, eine Auswerteeinheit und eine Befehlseinheit. Die Empfangseinheit ist dazu konfiguriert und verschaltet, eine aktuelle Ist-Zugpunkthöhe zu erfassen. Die Auswerteeinheit ist dazu konfiguriert, eine durch eine Höhenverstellung des Chassis relativ zum Fahrwerk hervorgerufene Abweichung der Ist-Zugpunkthöhe von einer Soll-Zugpunkthöhe zu berechnen, und die Befehlseinheit ist dazu konfiguriert, die Abweichung automatisch ganz oder zumindest teilweise zu korrigieren, indem ein von der Befehlseinheit gesendetes Korrektursignal eine Hydrauliksteuerung zu einem Verstellen mindestens eines der Nivellierzylinder veranlasst. Die Zugpunkthöhe ist dabei allgemein abhängig von einer Höhenposition des Chassis, sowie der Position des Zylinderkolbens des Nivellierzylinders.

Die Höhenposition des Chassis kann variiert werden, um unterschiedliche Mengen eines Einbaumaterials, zum Beispiel bituminöses oder Beton-Material zum Fertigen von Straßenbelägen zu verarbeiten. Zwischen Chassis und Einbaubohle befindet sich eine Förderschnecke, welche das Material in ausreichender Menge und Dicke gleichmäßig vor der Einbaubohle verteilen soll. Mit dem Verstellen der Höhenposition des Chassis wird auch die daran verankerte Förderschnecke verstellt, so dass der Platz vor der Einbaubohle variabel ist und ausreichend groß eingestellt werden kann, um genügend Material zu verteilen, aber auch nicht zu groß ist, so dass ein Auskühlen des Materials verhindert wird. Die Materialmenge ist dadurch auch an unterschiedliche Fertigungsgeschwindigkeiten anpassbar. Durch die automatische Korrektur des Zugpunktes der Einbaubohle kann dabei der Anstellwinkel der Einbaubohle und damit die Einbauhöhe des Mischguts konstant gehalten werden. Dabei muss kein weiterer Eingriff zum Erhalt der Einbauhöhe vom Bediener vorgenommen werden. Im Gegensatz zu früheren Systemen, welche einen Regelbedarf der Zugpunkthöhe nur indirekt über die Messung einer falschen Schichtdicke eines bereits verlegten Straßenbelags feststellten, wird durch die vorliegende Erfindung ein Einbau des Materials mit falscher Schichtdicke bereits im Vorhinein verhindert. Wie weiter unten beschrieben, können Tabellen mit entsprechender Zuordnung von Schichtdicke und Zugpunkthöhe im Steuerungssystem hinterlegt sein.

In einer vorteilhaften Variante ist eine am Fahrwerk installierte Skala dazu konfiguriert, die Zugpunkthöhe mit Bezug zum Boden anzuzeigen. Dies kann zum Beispiel eine fest installierte Skala mit mechanischer Umsetzung an einem Raupenträger sein. Damit kann die Zugpunkthöhe von einem Bediener, welcher zusätzlich zu einem Fahrer des Straßenfertigers vorhanden sein kann und sich neben dem Fahrzeug oder an der Einbaubohle aufhält, direkt abgelesen werden. Dies unterstützt den Fahrer des Straßenfertigers, da er nicht als einzige Person alle Parameter überwachen muss, und zudem kann die zweite Person Veränderungen an der Zugpunkthöhe oder anderer Einstellungen der Einbaubohle direkt mit dem Ergebnis des Einbaus vergleichen.

Üblicherweise ist eine an einem Bedienstand des Straßenfertigers integrierte elektronische Anzeige vorhanden und dazu konfiguriert, die Zugpunkthöhe mit Bezug zum Boden anzuzeigen. Durch eine solche Anzeige kann bereits der Fahrer neben allen anderen Betriebsparametern die Zugpunkthöhe überwachen und es kann zumindest vorübergehend auf einen zweiten Bediener am Straßenfertiger verzichtet werden. Außerdem kann die Anzeige mit optischen und/oder akustischen Signalen auf das Erreichen von vorher definierten Werten, wie zum Beispiel obere oder untere Grenzen, aufmerksam machen. Eine elektronische Anzeige gibt dabei die Möglichkeit, auf bekannte Weise weitere Informationen gleichzeitig zur Verfügung zu stellen. So kann auch auf Parameterkombinationen, wie zum Beispiel Fahrgeschwindigkeit und Anstellwinkel, hingewiesen werden, welche mit Hinblick auf die Fertigungsqualität und Effizienz zu bevorzugen oder zu vermeiden sind.

In einer weiteren zweckmäßigen Ausführungsform ist die Soll-Zugpunkthöhe durch einen Bediener vorgebbar oder es ist eine Soll-Schichtdicke durch einen Bediener vorgebbar und das Steuerungssystem ist dazu konfiguriert, die Soll-Schichtdicke in die Soll-Zugpunkthöhe umzurechnen, oder es ist die Soll-Zugpunkthöhe Teil eines Satzes von Parametern eines Betriebsprogramms, welches von dem Bediener auswählbar ist. So kann der Bediener an den Eingabegeräten des Bedienstands oder auch an Bedienterminals, welche zum Beispiel an der Einbaubohle vorhanden sind, die Betriebsparameter wählen, so dass diese, wie beschrieben, automatisch von dem Steuerungssystem überwacht werden. Da die Soll-Schichtdicke eines Straßenbelages im Vorhinein bekannt ist, ist es für den Bediener besonders einfach, diese vorzugeben und von dem Steuerungssystem in die Zugpunkthöhe umrechnen zu lassen.

In einer gängigen Variante ist das Chassis an einem Drehpunkt an einem vorderen Ende des Straßenfertigers mit dem Fahrwerk in fester Höhe mit Bezug zum Boden verbunden. Dabei ist das Chassis durch Heben und Senken an seinem Abwurfende, d.h. seinem hinteren Ende, höhenverstellbar, wobei sich das Chassis um den Drehpunkt dreht. Die Höhenverstellung des Chassis dient insbesondere dazu, den Platz direkt vor der Einbaubohle zu variieren, wodurch die Menge des Einbaumaterials, welches gleichzeitig von der Förderschnecke vor der Einbaubohle verteilt und damit verarbeitet werden kann, ebenfalls variabel ist. Deshalb ist es ausreichend, das Chassis an seinem Abwurfende in seiner Höhe zu verstellen. Am vorderen Ende des Straßenfertigers kann daher auf einen Hubmechanismus verzichtet werden, was den Herstellungs- und Wartungsaufwand und damit verbundene Kosten reduziert.

In einer weiteren möglichen Variante ist ein Sensor zum Erkennen der Zugpunkthöhe vorhanden, vorzugsweise an oder benachbart zu dem Nivellierzylinder. Der Sensor kann ein mechanischer Sensor, wie zum Beispiel ein Pendel- oder Skitaster, oder ein elektronischer Sensor, wie zum Beispiel ein Ultraschall- oder Lasersensor sein. Ein solcher Sensor liefert exakte Messwerte und kann elektronisch einfach ausgelesen werden. Ist der Sensor direkt an dem Zugpunkt der Einbaubohle angebracht, so kann er direkt die Ist-Zugpunkthöhe messen. Alternativ kann der Sensor auch an dem Chassis montiert sein und dessen Höhenposition am Nivellierzylinder messen und mit einer Position eines Zylinderkolbens kombinieren, um die Zugpunkthöhe zu ermitteln. Dazu wäre ein weiterer Sensor, welcher den Fahrweg des Zylinderkolbens misst, nötig. Eine Kombination der Position des Zylinderkolbens und der Höhenposition des Chassis im Bereich des Nivellierzylinders kann auch zentral von der Auswerteeinheit des elektronischen Steuerungssystems erfolgen.

Vorzugsweise umfasst das Steuerungssystem eine Speichereinheit, welche dazu geeignet ist, von einem Bediener eingegebene Parameter, sowie während des Betriebs ermittelte Parameter, insbesondere die Zugpunkthöhe, zu speichern. Somit können die während des Betriebs gemessenen Werte mit vorhandenen Vorgaben im Sinne eines Rückkopplungsmechanismus verglichen werden, und das Steuerungssystem kann bei Abweichungen mechanisch nachregeln. Auch kann die Speichereinheit Sätze von Parametern speichern, welche einem bestimmten Betriebsprogramm zugeordnet sind. Ein solches Betriebsprogramm kann dann vom Bediener ausgewählt werden. Dadurch kann das Steuerungssystem, wie beschrieben, die automatische Regelung des Nivellierzylinders auch im laufenden Betrieb bewerkstelligen. Es können zudem Parameterkombinationen, zum Beispiel Geschwindigkeit und Bohlenanstellwinkel, welche sich als vorteilhaft erwiesen haben, gespeichert und erneut verwendet werden. Außerdem können Sätze oder Tabellen von sich entsprechenden Parametern, wie zum Beispiel Zugpunkthöhe und Schichtdicke, gespeichert werden und dem Bediener zur Auswahl auf einer elektronischen Anzeige dargestellt werden.

Der beschriebene erfindungsgemäße Straßenfertiger ist dazu konfiguriert und geeignet, ein Verfahren zum automatischen Steuern einer Zugpunkthöhe eines Nivellierzylinders, wie im Folgenden beschrieben, durchzuführen. Im Hinblick auf das Verfahren beschriebene Merkmale können entsprechend auf den Straßenfertiger übertragen werden und umgekehrt.

Ein erfindungsgemäßes Verfahren zum automatischen Steuern einer Zugpunkthöhe eines Nivellierzylinders eines Straßenfertigers, wobei der Straßenfertiger ein elektronisches Steuerungssystem und ein relativ zu einem Fahrwerk höhenverstellbares Chassis umfasst, und wobei an dem Chassis und dem Nivellierzylinder ein Zugholm angelenkt ist, umfasst folgende Verfahrensschritte:

- Verstellen der Höhe des Chassis relativ zum Fahrwerk,
- Feststellen einer aktuellen Ist-Zugpunkthöhe,
- Berechnen einer von der Höhenverstellung hervorgerufenen Abweichung der Ist-Zugpunkthöhe von einer Soll-Zugpunkthöhe,
- Senden eines Korrektursignals an eine Hydrauliksteuerung, um den Nivellierzylinder zu verstellen und damit die Abweichung ganz oder zumindest teilweise zu korrigieren. Üblicherweise findet dieses Verfahren vor dem Beginn des Einbaubetriebs statt. Das Feststellen der aktuellen Ist-Zugpunkthöhe und ggf. die anschließenden Verfahrensschritte können jedoch auch während des Betriebs zur Kontrolle durchgeführt werden. Ebenso findet das Verfahren Anwendung, falls sich die Anforderungen an den Einbau, insbesondere die vorgesehene Schichtdicke, ändern. Wie bereits erwähnt, ist das Verfahren automatisiert und erfordert kein Eingreifen durch den Bediener.

In einer besonders vorteilhaften Variante berechnet das Steuerungssystem die Zugpunkthöhe anhand einer Höhenposition des Chassis. Wie in der Figurenbeschreibung weiter unten erläutert, wird die Höhenposition als einziger Parameter an dem Abwurfende des Chassis gemessen. Mit den bekannten geometrischen Verhältnissen kann so die Zugpunkthöhe bestimmt werden. Dies ist eine besonders einfache Möglichkeit und es wird lediglich ein Sensor zur Messung der Höhenposition am Abwurfende (hinteren Ende) des Chassis benötigt. Alternativ dazu kann auch, wie oben beschrieben, die Zugpunkthöhe mit einem Sensor ermittelt werden und von diesem zur Verarbeitung an das Steuerungssystem übergeben werden.

Im Folgenden werden Ausführungsbeispiele der Erfindung anhand der Figuren näher beschrieben. Dabei zeigen

Figur 1:      eine Seitenansicht eines Straßenfertigers mit einem höhenverstellbaren Chassis und einem Nivellierzylinder,

Figur 2:      eine Seitenansicht des Straßenfertigers mit dem höhenverstellbaren Chassis in einer unteren Grundposition sowie in einer oberen erhöhten Position,

Figur 3:      eine schematische Ansicht eines elektronischen Steuerungssystems mit dessen zugehörigen Komponenten, und

Figur 4:      eine schematische Ansicht eines Verfahrens zum automatischen Steuern einer Zugpunkthöhe des Nivellierzylinders.

Einander entsprechende Komponenten sind in den Figuren jeweils mit gleichen Bezugszeichen versehen.

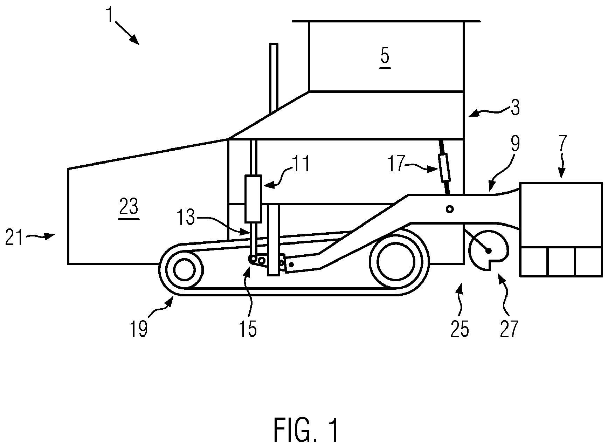

Figur 1 zeigt ein Ausführungsbeispiel eines erfindungsgemäßen Straßenfertigers 1 in einer Seitenansicht. Der Straßenfertiger 1 umfasst ein relativ zu einem Fahrwerk 19 höhenverstellbares Chassis 3, welches hier in einer unteren Grundposition gezeigt ist und einen Bedienstand 5 aufweist. Desweitern umfasst der Straßenfertiger 1 eine Einbaubohle 7, welche austauschbar oder seitlich ausziehbar sein kann. Die Einbaubohle 7 ist mit einem Zugholm 9 verbunden, welcher, gegebenenfalls über ein oder mehrere Scharniere, an einem Nivellierzylinder 11, bzw. dessen Kolbenstange 13 angelenkt ist. Ein Zugpunkt 15 definiert die gelenkartige Verbindung des Nivellierzylinders 11 mit dem Zugholm 9. Zum Anheben der Einbaubohle 7 bei Betriebsunterbrechungen kann ein Hubkolben 17 vorhanden sein. Während des Betriebs ist der Hubkolben 17 unbelastet, so dass die Einbaubohle 7 auf dem Einbaumaterial aufschwimmt.

Üblicherweise ist die Einbaubohle 7 jeweils mit einem Zugholm 9 an der rechten und linken Seite des Straßenfertigers 1 angelenkt. Das höhenverstellbare Chassis 3 ist auf einem Fahrwerk 19 angebracht, welches hier als Raupenfahrwerk dargestellt ist, aber auch ein Räderfahrwerk sein kann. Der Straßenfertiger 1 weist an seinem vorderen Ende 21 einen Schüttgutbunker 23 auf, in welchem ein Vorrat an Einbaumaterial aufbewahrt wird und aus welchem es mittels eines Förderbands durch einen Tunnel (nicht gezeigt) zum Abwurfende (hinteren Ende) 25 des Straßenfertigers 1 transportiert wird, wo es von einer Förderschnecke 27 gleichmäßig vor der gesamten Breite der Einbaubohle 7 verteilt wird.

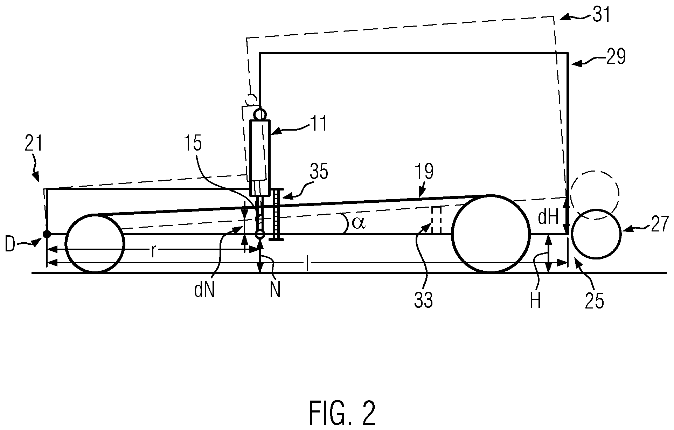

Figur 2 zeigt eine Seitenansicht des Straßenfertigers 1 mit dem höhenverstellbaren Chassis 3 in einer unteren Grundposition 29 sowie (in gestrichelten Linien) in einer oberen erhöhten Position 31. Die Anhebung des Chassis 3 gegenüber dem Fahrwerk 19 erfolgt mittels eines Hubmechanismus 33, welcher zum Beispiel hydraulisch sein kann, wobei das Chassis 3 an seinem vorderen Ende 21 in konstanter Höhe mit dem Fahrwerk 19 verbunden bleibt und um den Drehpunkt D dreht. Somit bewegen sich sowohl das hintere Ende 25 des Chassis 3 als auch der Zugpunkt 15 jeweils im Wesentlichen auf einer Kreisbahn um den Drehpunkt D. Durch das Anheben des Chassis 3 wird ebenfalls die Förderschnecke 27 angehoben, wodurch sich der Platz vor der Einbaubohle 7 vergrößert und mehr Material verbaut werden kann.

Wie oben beschrieben, kann die Änderung der Zugpunkthöhe dN entweder durch einen Sensor ermittelt werden, oder aus der Änderung der Höhenposition des Chassis dH, hergeleitet werden:
Es sei die Höhenposition H des Chassis 3, bzw. die Änderung der Höhenposition dH des Chassis 3, gemessen an dessen Abwurfende 25, sowie ein Abstand l des Abwurfendes 25 vom Drehpunkt D und ein Abstand r des Zugpunktes 15 vom Drehpunkt D bekannt, sowie alpha der Winkel, welchen das angehobene Chassis 3 mit der Horizontalen einschließt, so ergibt sich mit

$$\sin(alpha) = dH / l = dN / r$$

die Änderung der Zugpunkthöhe dN = dH * r / l.

Eine am Fahrwerk 19 installierte mechanische Skala 35 kann die Änderung der Zugpunkthöhe dN, bzw. die absolute Zugpunkthöhe N mit Bezug zum Boden anzeigen.

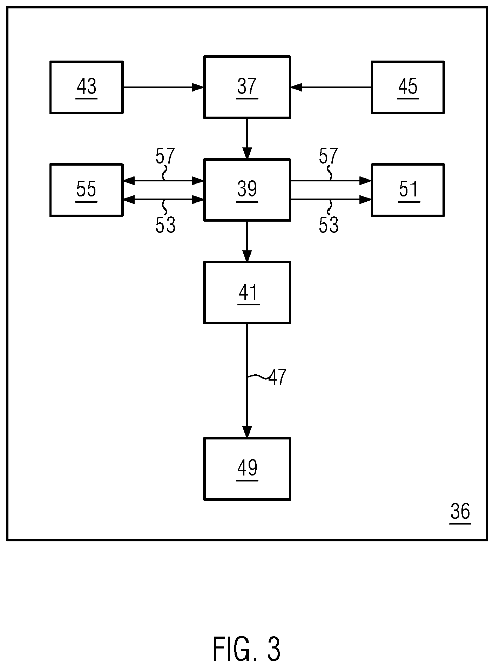

Figur 3 zeigt eine schematische Ansicht eines elektronischen Steuerungssystems 36 des Straßenfertigers 1 mit dessen zugehörigen Komponenten. Eine Empfangseinheit 37 kann eine aktuelle Ist-Zugpunkthöhe N, geliefert von einem ersten Sensor 43, sowie die Höhenposition H des Chassis 3, geliefert von einem zweiten Sensor 45, empfangen und an eine Auswerteeinheit 39 weiterleiten, welche eine Abweichung der Ist-Zugpunkthöhe N von einer Soll-Zugpunkthöhe entweder aus der gelieferten Ist-Zugpunkthöhe N oder der Höhenposition H des Chassis 3 gemäß Figur 2 berechnet. Die Befehlseinheit 41 kann dann ein entsprechendes Korrektursignal 47 an eine Hydrauliksteuerung 49 senden. Eine elektronische Anzeige 51 kann am Bedienstand 5 die gemessenen und berechneten Parameter 53 anzeigen, und eine Speichereinheit 55 kann mit diesen beschrieben werden und sie können von der Speichereinheit 55 wieder ausgelesen werden. Die Speichereinheit 55 dient ebenfalls zum Speichern von Paramtersätzen, die bestimmten Betriebsprogrammen 57 zugeordnet sind und vom Bediener ausgewählt werden können.

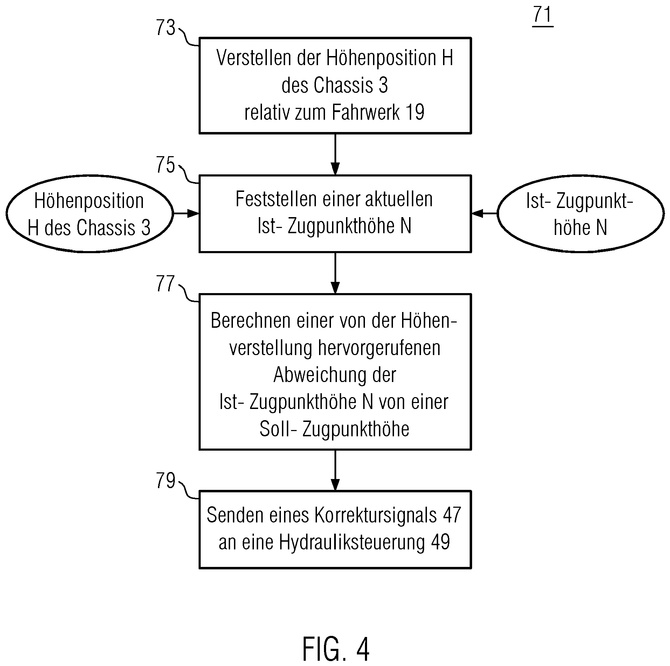

Figur 4 zeigt eine schematische Ansicht des Verfahrens 71 zum automatischen Steuern einer Zugpunkthöhe N des Nivellierzylinders 11. Wie bereits oben erläutert, umfasst das Verfahren 71 vier Verfahrensschritte 73, 75, 77, 79:

> 73 - Verstellen der Höhenposition H des Chassis 3 relativ zum Fahrwerk 19,

> 75 - Feststellen einer aktuellen Ist-Zugpunkthöhe N,

> 77 - Berechnen einer von der Höhenverstellung hervorgerufenen Abweichung der Ist-Zugpunkthöhe N von einer Soll-Zugpunkthöhe,

> 79 - Senden eines Korrektursignals 47 an eine Hydrauliksteuerung 49, um den Nivellierzylinder 11 zu verstellen und damit die Abweichung ganz oder zumindest teilweise zu korrigieren.

Eingangswerte für das Verfahren 71 sind die Ist-Zugpunkthöhe N sowie gegebenenfalls die Höhenposition H des Chassis 3.

Ausgehend von den beschriebenen Ausführungsformen für einen Straßenfertiger 1 mit automatischer Anpassung der Nivellierzylindereinstellung sind vielerlei Variationen desselben denkbar. So kann das elektronische Steuerungssystem 36 dezentral mit voneinander getrennten Einheiten (Empfangs-, Auswerte- und Befehlseinheit) ausgebildet sein, aber auch in Form einer herkömmlichen Datenverarbeitungsstruktur mit einer zentralen Prozessoreinheit.

## Patentansprüche

1. Straßenfertiger (1) mit einem Fahrwerk (19), einem relativ zum Fahrwerk (19) höhenverstellbaren Chassis (3), einem elektronischen Steuerungssystem (36) und einer an Zugholmen (9) angebrachten Einbaubohle (7), wobei die Zugholme (9) jeweils an einem Zugpunkt (15) an dem Chassis (3) angelenkt sind und die Zugpunkte (15) mittels je eines Nivellierzylinders (11) relativ zum Chassis (3) verstellbar sind, **dadurch gekennzeichnet, dass** das Steuerungssystem (36) eine Empfangseinheit (37), eine Auswerteeinheit (39) und eine Befehlseinheit (41) umfasst, wobei die Empfangseinheit (37) dazu konfiguriert ist, eine aktuelle Ist-Zugpunkthöhe (N) zu erfassen und die Auswerteeinheit (39) dazu konfiguriert ist, eine durch eine Höhenverstellung des Chassis (3) relativ zum Fahrwerk (19) hervorgerufene Abweichung der Ist-Zugpunkthöhe (N) von einer Soll-Zugpunkthöhe zu berechnen und die Befehlseinheit (41) dazu konfiguriert ist, die Abweichung automatisch zumindest teilweise zu korrigieren, indem ein von der Befehlseinheit (41) gesendetes Korrektursignal (47) eine Hydrauliksteuerung (49) zu einem Verstellen mindestens eines der Nivellierzylinder (11) veranlasst.

2. Straßenfertiger nach einem der vorangegangenen Ansprüche, **dadurch gekennzeichnet, dass** eine an einem Bedienstand (5) des Straßenfertigers (1) integrierte elektronische Anzeige (51) dazu konfiguriert ist, die Zugpunkthöhe (N) mit Bezug zum Boden anzuzeigen.

3. Straßenfertiger nach einem der vorangegangenen Ansprüche, **dadurch gekennzeichnet, dass** die Soll-Zugpunkthöhe durch einen Bediener vorgebbar ist oder eine Soll-Schichtdicke durch einen Bediener vorgebbar ist und das Steuerungssystem (36) dazu konfiguriert ist, die Soll-Schichtdicke in die Soll-Zugpunkthöhe umzurechnen, oder die Soll-Zugpunkthöhe Teil eines Satzes von Parametern (53) eines Betriebsprogramms (57) ist, welches von dem Bediener auswählbar ist.

4. Straßenfertiger nach einem der vorangegangenen Ansprüche, **dadurch gekennzeichnet, dass** das Chassis (3) an einem Drehpunkt (D) an einem vorderen Ende (21) des Straßenfertigers (1) mit dem Fahrwerk (19) in fester Höhe mit Bezug zum Boden verbunden ist, und das Chassis (3) durch Heben und Senken an seinem Abwurfende (25) höhenverstellbar ist, wobei das Chassis (3) um den Drehpunkt (D) dreht.

5. Straßenfertiger nach einem der vorangegangenen Ansprüche, **dadurch gekennzeichnet, dass** ein Sensor (43) zum Erkennen der Zugpunkthöhe (N) vorhanden ist, vorzugsweise an oder benachbart zu dem Nivellierzylinder (11).

6. Straßenfertiger nach einem der vorangegangenen Ansprüche, **dadurch gekennzeichnet, dass** ein Sensor an dem Chassis (3) angeordnet und konfiguriert ist, die Höhenposition des Chassis (3) am Nivellierzylinder (11) zu messen.

7. Straßenfertiger nach Anspruch 7, **gekennzeichnet durch** einen weiteren Sensor, welcher dazu konfiguriert ist, den Fahrweg eines Zylinderkolbens des Nivellierzylinders (11) zu messen.

8. Straßenfertiger nach einem der vorangegangenen Ansprüche, **dadurch gekennzeichnet, dass** eine Kombination der Position eines Zylinderkolbens des Nivellierzylinders (11) und einer Höhenposition des Chassis (3) im Bereich des Nivellierzylinders (11) zentral von der Auswerteeinheit (39) erfolgt, um die Ist-Zugpunkthöhe (N) zu ermitteln.

9. Straßenfertiger nach einem der vorangegangenen Ansprüche, **dadurch gekennzeichnet, dass** das Steuerungssystem (36) eine Speichereinheit (55) umfasst, welche dazu geeignet ist, von einem Bediener eingegebene Parameter (53), sowie während des Betriebs ermittelte Parameter (53), insbesondere die Zugpunkthöhe (N), zu speichern.

10. Straßenfertiger nach einem der vorangegangenen Ansprüche, **gekennzeichnet durch** eine Speichereinheit (55), welche dazu konfiguriert ist, Sätze von Parametern zu speichern, welche einem bestimmten Betriebsprogramm zugeordnet sind, insbesondere Parameterkombinationen von Geschwindigkeit und Bohlenanstellwinkel zu speichern.

11. Verfahren (71) zum automatischen Steuern einer Zugpunkthöhe (N) eines Nivellierzylinders (11) eines Straßenfertigers (1), wobei der Straßenfertiger (1) ein elektronisches Steuerungssystem (36) und ein relativ zu einem Fahrwerk (19) höhenverstellbares Chassis (3) umfasst, und wobei an dem Chassis (3) und dem Nivellierzylinder (11) ein Zugholm (9) angelenkt ist, **gekennzeichnet durch folgende Verfahrensschritte:**

    (73) - Verstellen der Höhenposition (H) des Chassis (3) relativ zum Fahrwerk (19),
    (75) - Feststellen einer aktuellen Ist-Zugpunkthöhe (N),
    (77) - Berechnen einer von der Höhenverstellung hervorgerufenen Abweichung der Ist-Zugpunkthöhe (N) von einer Soll-Zugpunkthöhe,
    (79) - Senden eines Korrektursignals (47) an eine Hydrauliksteuerung (49), um den Nivellierzylinder (11) zu verstellen und damit die Abweichung zumindest teilweise zu korrigieren.

12. Verfahren nach Anspruch 11, **dadurch gekennzeichnet, dass** das Steuerungssystem (36) die Ist-Zugpunkthöhe (N) anhand einer Höhenposition (H) des Chassis (3) berechnet.

13. Verfahren nach Anspruch 11 oder 12, **dadurch gekennzeichnet, dass** das Steuerungssystem (36) eine Höhenänderung (dN) des Zugpunktes im Wesentlichen aus einer Höhenänderung (dH) des Chassis (3) an seinem Abwurfende (25), einem Abstand (r) des Zugpunktes (15) zum Drehpunkt (D) und einem Abstand (I) des Abwurfendes (25) zum Drehpunkt (D) mittels der Formel $dN = dH * r / I$ berechnet.

14. Verfahren nach Anspruch 11, **dadurch gekennzeichnet, dass** ein Sensor (43) die Zugpunkthöhe (N) ermittelt und an das Steuerungssystem (36) übergibt.

15. Verfahren nach Anspruch 11, **dadurch gekennzeichnet, dass** das Feststellen einer aktuellen Ist-Zugpunkthöhe (N) mittels Kombination der Position eines Zylinderkolbens des Nivellierzylinders (11) und der Höhenposition des Chassis (3) im Bereich des Nivellierzylinders (11) erfolgt.

FIG. 1

FIG. 2

FIG. 3

71

73 — Verstellen der Höhenposition H
des Chassis 3
relativ zum Fahrwerk 19

Höhenposition
H des Chassis 3

75 — Feststellen einer aktuellen
Ist- Zugpunkthöhe N

Ist- Zugpunkthöhe N

77 — Berechnen einer von der Höhenverstellung hervorgerufenen
Abweichung der
Ist- Zugpunkthöhe N von einer
Soll- Zugpunkthöhe

79 — Senden eines Korrektursignals 47
an eine Hydrauliksteuerung 49

FIG. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0849398 B1